## Europäisches Patentamt
## European Patent Office
## Office européen des brevets

(19)

(11) Veröffentlichungsnummer: **0 182 038**
**B1**

(12)

# EUROPÄISCHE PATENTSCHRIFT

(45) Veröffentlichungstag der Patentschrift:
31.08.88

(51) Int. Cl.⁴: **F 16 B 13/02**

(21) Anmeldenummer: **85112015.4**

(22) Anmeldetag: **23.09.85**

(54) **Hülsenförmiger Spreizdübel.**

(30) Priorität: **20.11.84 DE 3442382**

(43) Veröffentlichungstag der Anmeldung:
**28.05.86 Patentblatt 86/22**

(45) Bekanntmachung des Hinweises auf die Patenterteilung:
**31.08.88 Patentblatt 88/35**

(84) Benannte Vertragsstaaten:
**AT BE CH DE FR GB IT LI NL SE**

(56) Entgegenhaltungen:
**EP-A-0 113 893**
**DE-A-2 753 547**
**DE-A-2 832 821**
**DE-B-1 400 931**
**DE-C-2 520 019**

(73) Patentinhaber: **HILTI Aktiengesellschaft, FL- 9494 Schaan (LI)**

(72) Erfinder: **Mirsberger, Helmut, Friedrich- List- Strasse 118, D-8000 München 70 (DE)**
Erfinder: **Lang, Gusztav, Dr. Dipl.- Ing., Dr. Böttcher- Strasse 26, D-8000 München 60 (DE)**

(74) Vertreter: **Wildi, Roland, Hilti Aktiengesellschaft Patentabteilung, FL- 9494 Schaan (LI)**

## Beschreibung

Hülsenförmiger Spreizdübel, der an seiner Aussenkontur über wenigstens einen Teil seiner Länge in Umfansrichtung verlaufende, axial aneinandergereihte Rippen mit gleichem axialen Abstand aufweist, wobei die Rippen sägezahnartig, mit in Einführrichtung weisender längerer Zahnflanke ausgebildet sind und unter Bildung achsparallel verlaufender Zahnleisten in Umfangsbereiche unterteilt sind.

Ein aus der DE-A-1-3 238 852 bekannter Spreizdübel der in Rede stehenden Art weist eine Aussenkontur mit in Umfangsrichtung verlaufenden Rippen auf. Die Rippen haben die Aufgabe, beim Einsatz des Dübels in Bauteilen aus Vollmaterial unter Angriff an der Wandung einer Aufnahmebohrung eine Verankerung zu schaffen.

Beim Einsatz in Bauteilen, wie Hohlklammern aufweisendem Mauerwerk oder Platten, können die Rippen durch Hintergreifen der Kammerstege oder der Platten eine formschlüssige Verankerung des Dübels schaffen. Bei diesem Anwendungsfall als nachteilig erweist sich der relativ grosse axiale Abstand zwischen den Rippen, so dass beim Belasten des Dübels ein gewisser Schlupf auftritt.

Ferner ist aus der DE-A-2 832 821 ein Spreizdübel mit einer Oberflächenprofilierung entnehmbar. Die Oberflächenprofilierung besteht aus voneinander axial beabstandeten Vorsprüngen. Abgesehen davon, daß diese Vorsprünge eine für den hintergreifenden Einsatz ungeeignete Ausbildung aufweisen, könnten die Vorsprünge einen störenden Schlupf nicht unterbinden, da diese in grossem radialen Abstand voneinander angeordnet sind. Auch das axial versetzte Anordnen zueinander in Umfangsrichtung benachbarter Vorsprünge kann einen störenden Schlupf nicht verhindern.

Die Aufgabe der Erfindung ist die Schaffung eines auch für den hintergreifenden Einsatz geeigneten, keinen störenden Schlupf aufweisenden Spreizdübels.

Erfindungsgemäß wird die Aufgabe dadurch gelöst, daß die einander jeweils benachbarten Umfangsbereiche der die Zahnleisten bildenden Rippen zueinander um die halbe Rippenteilung versetzt sind.

Durch das erfindungsgemäße Versetzen der Umfangsbereiche werden zwischen den einander in Umfangsrichtung benachbarten Umfangsbereichen der Rippen axiale Abstände erzielt, die kleiner sind als der axiale Abstand zwischen den in einer Zahnleiste liegenden Umfangsbereichen. Beim Spreizvorgang werden die Zahnleisten ausgelenkt, wobei jeweils ein Umfangsbereich jeder Zahnleiste die Kammerstege oder die Platte hintergreift. Dank der erfindungsgemäßen Versetzung der Umfangsbereiche ist der axiale Verschiebeweg bis zur Erzielung der Abstützposition vernachlässigbar klein.

Um einen zuverlässigen Hintergriff der Rippen am Bauteil sicherzustellen, darf die maßgeblich durch die Rippenteilung bestimmte Größe der Rippen ein gewisses Maß nicht unterschreiten. Die bevorzugte Ausbildung schafft bei ausreichender Größe der Rippen einen sicheren Hintergriff mit praktisch vernachlässigbarem Schlupf.

Eine gleichmäßige und besonders kraftaufnahmefähige Abstützung wird erreicht, indem vier Umfangsbereiche vorgesehen sind. Dieserart übernehmen jeweils die Umfangsbereiche einander diametral gegenüberliegender Zahnleisten die Abstützung. Derselbe Effekt wird auch mit jeder größeren geraden Anzahl von Umfangsbereichen erzielt. Die Ausbildung von vier Umfangsbereichen zeichnet sich vor allem aber auch durch einfache Herstellbarkeit und hohe Festigkeit aus.

Die Erfindung wird nachstehend anhand einer Zeichnung, die ein Ausführungsbeispiel wiedergibt, näher erläutert. Es zeigen:

Fig. 1 einen Spreizdübel in Ansicht;
Fig. 2 einen Schnitt durch den Spreizdübel nach Fig. 1 gemäß Schnittverlauf II - II.

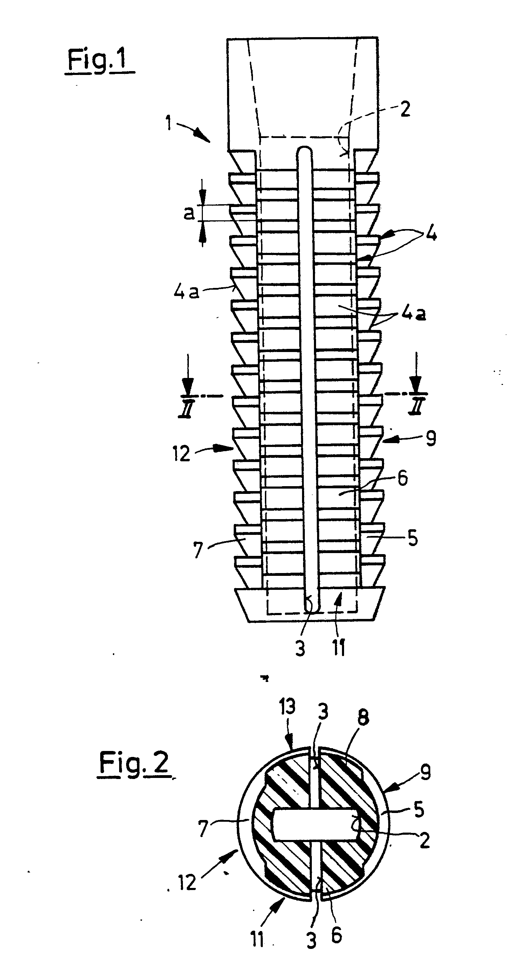

Der in Fig. 1 insgesamt mit 1 bezeichnete Spreizdübel ist im wesentlichen hülsenförmig ausgebildet und besteht aus Kunststoff. Er ist von einer Zentralbohrung 2 durchsetzt und weist, wie die Fig. 2 verdeutlicht, einander diametral gegenüberliegende Längsschlitze 3 auf. Über die Länge der Längsschlitze 3 ist die Aussenkontur des Spreizdübels 1 mit in Umfangsrichtung sich erstreckenden, insgesamt mit 4 bezeichneten sägezahnartigen Rippen versehen, deren längere Zahnflanke 4a in Einführrichtung weist. Die Rippen 4 sind in vier gleich grosse Umfangsbereiche 5, 6, 7, 8 unterteilt, welche achsparallel verlaufende, radial auslenkbare, insgesamt mit 9, 11, 12, 13 bezeichnete Zahnleisten bilden. Die einander in Umfangsrichtung jeweils benachbarten Umfangsbereiche 5, 6, 7, 8 der Rippen 4 sind um ein Maß zueinander axial versetzt, das der halben Rippenteilung a zwischen den Umfangsbereichen 5, 6, 7, 8 jeder Zahnleiste 9, 11, 12, 13 entspricht.

## Patentansprüche

1. Hülsenförmiger Spreizdübel (1), der an seiner Aussenkontur über wenigstens einen Teil seiner Lange in Umfangsrichtung verlaufende, axial aneinandergereihte Rippen (4) mit gleichem axialen Abstand aufweist, wobei die Rippen (4) sägezahnartig, mit in Einführrichtung weisender längerer Zahnflanke (4a) ausgebildet sind und unter Bildung achsparallel verlaufender Zahnleisten (9, 11, 12, 13) in Umfangsbereiche (5, 6, 7, 8) unterteilt sind, dadurch gekennzeichnet, dass die einander jeweils benachbarten Umfangsbereiche (5, 6, 7, 8) der die Zahnleisten (9, 11, 12, 13) bildenden Rippen (4) zueinander um die halbe Rippenteilung (a) versetzt sind.

2. Spreizdübel nach Anspruch 1, dadurch gekennzeichnet, dass vier Umfangbereiche (5, 6, 7, 8) vorgesehen sind.

## Claims

1. A sleeve-shaped expansible dowel (1) which has on its outer contour over at least a part of its length ribs (4) which are ranged axially side-by-side and which extend in the circumferential direction and which have the same axial spacing, in which repsect the ribs (4) are designed in sawtooth-like manner, with the longer tooth flank (4a) pointing in the insertion direction, and are subdivided along with the formation of tooth strips (9, 11, 12, 13) into circumferential regions (5, 6, 7, 8), characterised in that the mutually respectively adjacent circumferential regions (5, 6, 7, 8) of the ribs (4) which form the tooth strips (9, 11, 12, 13) are offset to one another by half the rib division (a).

2. An expansible dowel according to claim 1, characterised in that four circumferential regions (5, 6, 7, 8) are provided.

## Revendications

1. Cheville à expansion en forme de douille (1) qui présente sur son contour extérieur des nervures (4) s'étendant au moins sur une partie de sa longueur, dans le sens de son pourtour et disposées en file axiale à la même distance axiale les unes des autres, les nervures (4) étant conformées en dents de scie avec le flanc de dent le plus long (4a) dirigé dans le sens de l'enfoncement et étant subdivisées en zones de pourtour (5, 6, 7, 8) avec formation de baguettes en forme de dents (9, 11, 12, 13) oritentées parallèlement à l'axe, caractérisée en ce que les zones de pourtour (5, 6, 7, 8) respectivement voisines des nervures (4) formant les baguettes en forme de dents (9, 11, 12, 13) sont décalées les unes par rapport aux autres de la moitié de l'écartement (a) des nervures.

2. Cheville à expansion selon la revendication 1, caractérisée en ce qu'il est prévu quatre zones de pourtour (5, 6, 7, 8).

0 182 038

Fig.1

Fig.2

1